# EUROPEAN PATENT APPLICATION

(11) **EP 1 944 783 A1**
(43) Date of publication of application: **16.07.2008**
(21) Application number: 07124074.1
(22) Date of filing: 27.12.2007
(51) Int. Cl.: H01H 19/00, H01H 25/06

(54) **Manipulation input device and electronic instrument using the same**

(30) Priority: 12.01.2007 JP 2007004879
(71) Applicant: OMRON CORPORATION, Kyoto-shi, Kyoto 600-8530 (JP)
(72) Inventor: Miyasaka, Takeshi, KYOTO Kyoto 600-8530 (JP); Tanaka, Masayuki, KYOTO Kyoto 600-8530 (JP)
(74) Representative: Brykman, Georges

(57) **Abstract**

A manipulation input device has a low-profile and a high magnetic sensitivity. It includes a base; a printed-circuit board adhering integrally to an upper surface of the base and having on an upper surface thereof push-button switches and a magnetic-field detection element, a ring-shape plate spring and a pedestal portion integrated in a manipulation member, a pressing projection provided toward a lower surface of the pedestal portion and manipulably press-contacting a push-button switch of the printed-circuit board by fixing a mounting portion to an outer circumferential edge of the upper surface of the base, the mounting portion being extended downward from an outer circumferential edge of the ring-shape plate spring; and a manipulation dial rotatably assembled in an upper surface of the pedestal portion, a ring magnet being assembled in a lower surface thereof, N poles and S poles being alternatively arranged in the ring magnet.

## Description

### BACKGROUND OF THE INVENTION

### 1. Field of the Invention

The present invention relates to a manipulation input device suitable to a cellular phone and a portable music player, particularly to a low-profile manipulation input device.

### 2. Description of the related art

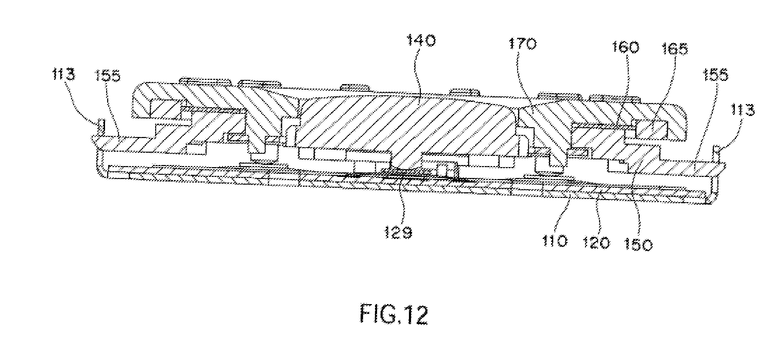

Conventionally, for example, as shown in FIG. 12, there is a manipulation input device used in the cellular phone including a base 110, a printed-circuit board 120, a manipulation plate 150, and a disc-type manipulation dial 170. A plurality of push-button switches and a magnetic-field detection element are mounted in an upper surface of the printed-circuit board 120, and the printed-circuit board 120 is integral with the base 110 by stacking the printed-circuit board 120 on the base 110. The manipulation plate 150 is placed on the printed-circuit board 120. A ring magnet 165 in which N poles and S poles are alternately arranged is assembled in a lower surface of the manipulation dial 170, and the manipulation dial 170 is rotatably assembled on the manipulation plate 150. In the manipulation input device, the manipulation dial 170 is rotated to detect a change in magnetic flux of the ring magnet 165 using the magnetic-field detection element, thereby detecting a rotating direction. On the other hand, the push-button switch is manipulated by pressing the manipulation dial 170 (refer to, for example, Japanese Patent Application Laid-Open No. 2006-285743).

However, in the manipulation input device, elastic pawl portions 155 and 155 extended from the manipulation plate 150 are latched and assembled in a pair of elastic engagement holders 113 and 113 cut and raised from an outer circumferential edge portion of the base 110. Therefore, when the manipulation input device is assembled in a chassis of the cellular phone, the elastic engagement holder 113 is easily caught to abstract the assembly.

Because the manipulation plate 150 of the manipulation input device is formed by a resin molded component, fatigue fracture is easily generated by a repeatedly-applied pressing-down force. Therefore, even if the thickness of the manipulation plate is decreased to thin the manipulation input device, there is a limitation to the thinning. Additionally, the limitation to the thinning of the manipulation plate increases a distance between the ring magnet of the manipulation dial rotatably supported by the upper surface of the manipulation plate and the magnetic-field detection element mounted in the upper surface of the printed-circuit board. Therefore, the magnetic-field detection element decreases sensitivity to the ring magnet, and it is necessary to use the ring magnet having a large magnetic force, i.e., the ring magnet having a large sectional area. Accordingly, a height of the whole of the manipulation input device is increased, which results in a problem in that the manipulation input device cannot be thinned.

In view of the foregoing, an object of the present invention is to provide a low-profile manipulation input device having an excellent assembly property and a high magnetic sensitivity property.

### SUMMARY OF THE INVENTION

In order to solve the above problems, a manipulation input device according to a first aspect of the present invention includes a base; a printed-circuit board in which a plurality of push-button switches and a magnetic-field detection element are mounted on an upper surface thereof, the printed-circuit board adhering integrally to an upper surface of the base; a manipulation member in which ring-shape plate spring and a pedestal portion are integrated, a pressing projection manipulably press-contacting a push-button switch of the printed-circuit board by fixing a mounting portion to an outer circumferential edge portion of the upper surface of the base, the pressing projection being provided toward a lower surface of the pedestal portion, the mounting portion being extended downward from an outer circumferential edge portion of the ring-shape plate spring; and a manipulation dial in which a ring magnet is assembled in a lower surface thereof, N poles and S poles being alternatively arranged in the ring magnet, the manipulation dial being rotatably assembled in an upper surface of the pedestal portion, wherein a change in magnetic flux of the ring magnet is detected with the magnetic-field detection element to detect a rotating direction by rotating the manipulation dial, and the push-button switch is manipulated with the pressing projection provided in the lower surface of the pedestal portion of the manipulation member by pressing the manipulation dial.

In the first aspect of the present invention, the mounting portion extended downward from the outer circumferential edge portion of the ring-shape plate spring is fixed to the outer circumferential edge portion of the upper surface of the base. Therefore, unlike the conventional technique, it is not necessary that the elastic engagement holder be cut and raised in the base, and it is not necessary to avoid the elastic engagement holder when the manipulation input device is assembled in the chassis of the cellular phone. As a result, an installation space can be reduced in the chassis to obtain the low-profile manipulation input device having the excellent assembly property.

In the manipulation input device according to the first aspect of the present invention, preferably a resin pedestal portion is integrally molded in a metal ring-shape plate spring. Accordingly, because the metal material having excellent strength is used as the ring-shape plate spring, the ring-shape plate spring is hardly broken to improve durability, and the ring-shape plate spring can be thinned compared with the conventional technique. The whole of the manipulation member is thinned, so that the ring magnet of the manipulation dial rotatably supported by the upper surface of the manipulation member can be disposed near the magnetic-field detection element mounted in the upper surface of the printed-circuit board. Therefore, sensitivity of the magnetic-field detection element is improved and the low-profile ring magnet is used, so that the whole of the manipulation input device can further be thinned.

In the manipulation input device according to the first aspect of the present invention, preferably an outer diameter of the pedestal portion of the manipulation member is smaller than an inner diameter of the ring magnet, and the pedestal portion of the manipulation member is disposed inside the ring magnet. Accordingly, because the ring magnet of the manipulation dial does not overlap the pedestal portion of the manipulation member, the manipulation input device is further thinned.

In the manipulation input device according to the first aspect of the present invention, preferably a push button is disposed in a manipulation hole through a ring spring upwardly bent and folded into two such that the push-button switch mounted in the printed-circuit board can be manipulated, the manipulation hole being made in a center of the manipulation dial.

Accordingly, because the push button disposed in the center of the manipulation dial is always biased by the ring spring, looseness is eliminated to obtain the manipulation input device having a comfortable manipulation feeling.

In an electronic instrument according to a second aspect of the present invention, a manipulation dial is attached in an exposed manner such that the manipulation input device according to the first aspect of the present invention can be manipulated from an outside.

In accordance with the present invention, the low-profile electronic instrument in which the magnetic property of the magnetic-field detection element can effectively be used is obtained.

### BRIEF DESCRIPTION OF THE DRAWINGS

FIG. 1A shows a perspective view of a manipulation input device according to an embodiment of the present invention when viewed from above, and FIG. 1B shows a perspective view of the manipulation input device when viewed from below;
FIG. 2 shows a sectional view taken along the line II-II of FIG. 1A;
FIG. 3 shows a sectional view taken along the line III-III of FIG. 1A;
FIG. 4 shows an exploded perspective view of the manipulation input device shown in FIG. 1A;
FIG. 5 shows an exploded perspective view of components constituting the manipulation input device shown in FIG. 4;
FIG. 6 shows an exploded perspective view of components constituting the manipulation input device shown in FIG. 4;
FIG. 7 shows an exploded perspective view of components constituting the manipulation input device shown in FIG. 4;
FIG. 8A shows a partially enlarged perspective view of the component shown in FIG. 7, and FIG. 8B shows a partially enlarged exploded perspective view of the component shown in FIG. 7;
FIG. 9 shows an exploded perspective view of the manipulation input device shown in FIG. 1B;
FIG. 10 shows an exploded perspective view of components constituting the manipulation input device shown in FIG. 9;
FIG. 11 shows an exploded perspective view of the component shown in FIG. 9; and
FIG. 12 shows a sectional view of a conventional manipulation input device.

### DETAILED DESCRIPTION OF THE PREFERRED EMBODIMENT

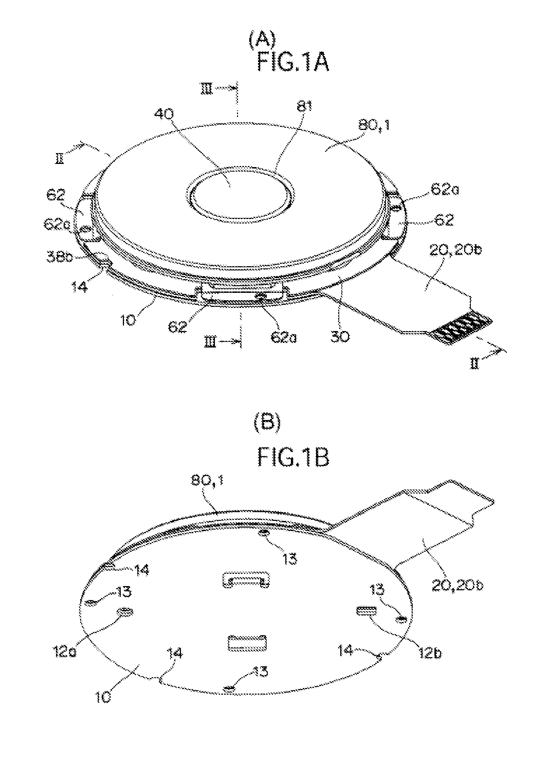

A manipulation input device according to a preferred embodiment of the present invention will be described below with reference to the accompanying drawings of FIGS 1 to 11. A manipulation input device 1 according to an embodiment has a thickness of about 2 mm, and the manipulation input device 1 is used when a scroll bar in a monitor of a cellular phone is scrolled to perform selection and instruction.

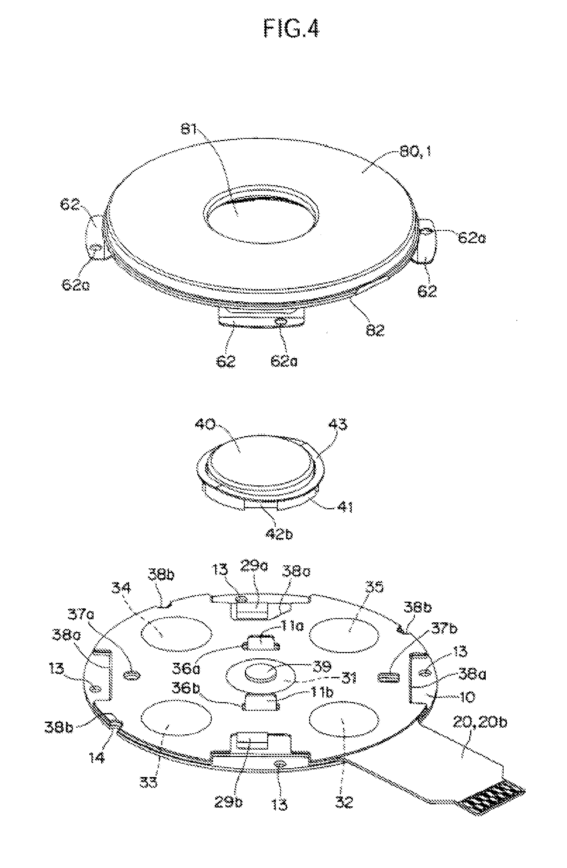

As shown in FIGS. 4 to 8, the manipulation input device 1 includes a metal base 10, a printed-circuit board 20, a push button 40, a fixing ring 50, a manipulation member 60, a slide sheet 70, a ring magnet 75, and a manipulation dial 80. The printed-circuit board 20 is formed of a flexible resin film, and the printed-circuit board 20 is coated with an insulating sheet 30.

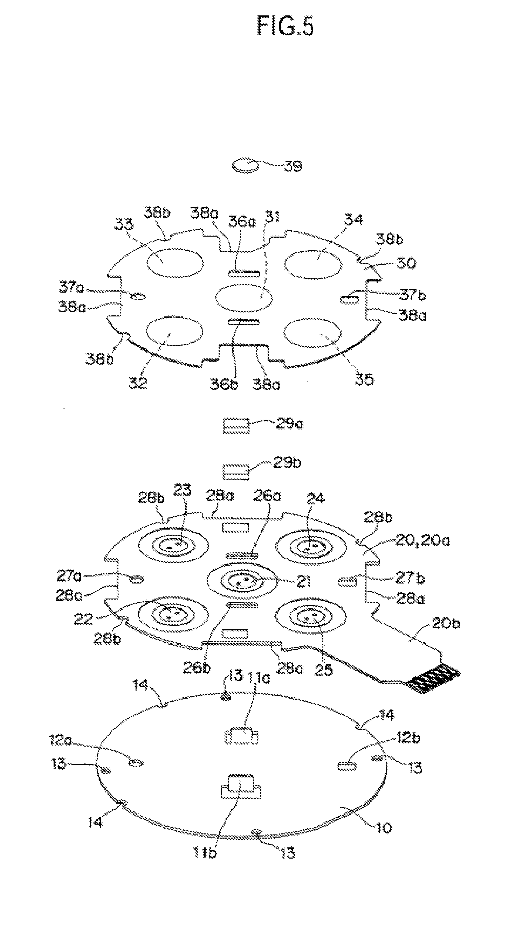

As shown in FIG. 5, the metal base 10 has a substantially circular shape when viewed from above, and a pair of positioning projections 11 a and 11 b are cut and raised upward in a central portion of the metal base 10. The positioning projections 11 a and 11 b have different widths in order to prevent false mounting. Jig holes 12a and 12b and positioning holes 13 are made near outer circumferential edge portion of the metal base 10. The jig holes 12a and 12b are made in circular and square shapes respectively. In the case where the metal base 10 is assembled on a customer side, positioning notches 14 are provided in the outer circumferential edge portion of the metal base 10 to enhance assembly accuracy with a chassis of the cellular phone.

As shown in FIG. 5, the printed-circuit board 20 is formed of a flexible resin film having the substantially same planar shape as the metal base 10, and the printed-circuit board 20 includes a substantially circular board main body 20a and a lead portion 20b. A bonding agent is applied to a back side of the board main body 20a and coated with releasing paper. The lead portion 20b is extended from the board main body 20a. A central fixed contact portion 21 is concentrically disposed in the center of the board main body 20a, and fixed contact portions 22 to 25 are arranged at equal intervals around the central fixed contact portion 21. In the board main body 20a, through-holes 26a and 26b are made at opposite positions relative to the central fixed contact portion 21. Jig holes 27a and 27b and notches 28a and 28b are provided at positions corresponding to the jig holes 12a and 12b, positioning holes 13, and notches 14 of the metal base 10 respectively. In the board main body 20a, hall elements 29a and 29b are electrically connected at positions facing each other relative to the through-holes 26a and 26b.

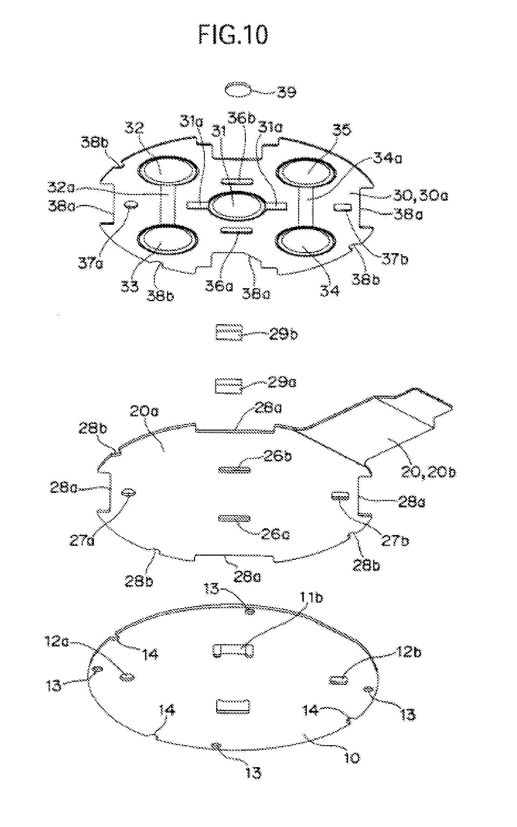

As shown in FIGS. 5 and 10, the insulating sheet 30 has a planar shape in which the board main body 20a can be coated, and movable contacts 31 to 35 adhere integrally to positions corresponding to the fixed contact portion 21 to 25 in the back side of the insulating sheet 30. The movable contacts 31 to 35 are formed by electrically-conductive reversing springs having thin dome shapes. In the insulating sheet 30, through-holes 36a and 36b and jig holes 37a and 37b are provided at positions corresponding to the through-holes 26a and 26b and jig holes 27a and 27b of the printed-circuit board 20 respectively. In the outer circumferential edge portion of the insulating sheet 30, notches 38a and 38b are provided at positions corresponding to the notches 28a and 28b of the printed-circuit board 20. As shown in FIG. 10, in the back side of the insulating sheet 30, backing sheets 30a adhere integrally around the movable contact 31, between the movable contact 32 and the movable contact 33, and between the movable contact 34 and the movable contact 35 in order to form shallow air releasing grooves. A spacer 39 is disposed at a position corresponding to the center of the movable contact 31 in an upper surface of the insulating sheet 30.

The entire surface and back side of the printed-circuit board 20 are coated with insulating resin films except for the positioning hole and the jig hole.

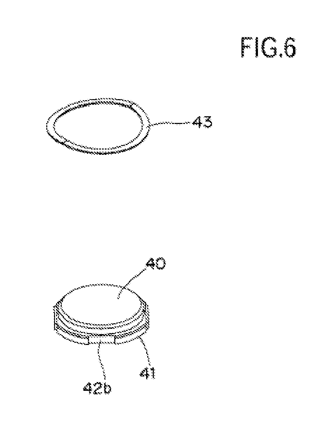

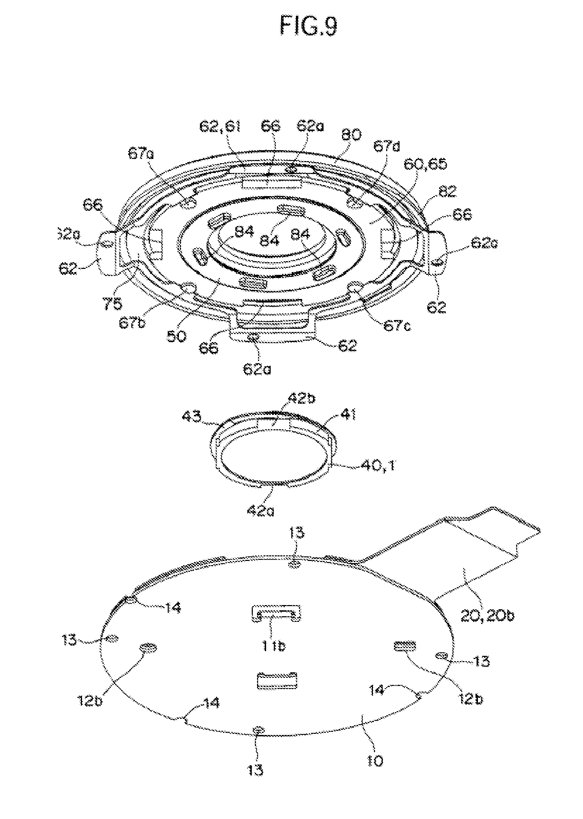

As shown in FIG. 6, the push button 40, which will be described later in detail, has an outer circumferential shape which can be inserted in a manipulation hole 81 of a manipulation dial 80, and retaining ring rib 41 is integrally formed in the outer circumferential edge portion at a lower end of the push button 40. Guiding slits 42a and 42b (see FIG. 9) are formed in an outer circumferential surface of the ring rib 41 so as to slide-engage the positioning projections 11 a and 11 b of the metal base 10. In the push button 40 a ring spring 43 engages the ring rib 41. The ring spring 43 is upwardly bent and folded into two so as to be able to bias the push button 40 onto the lower side.

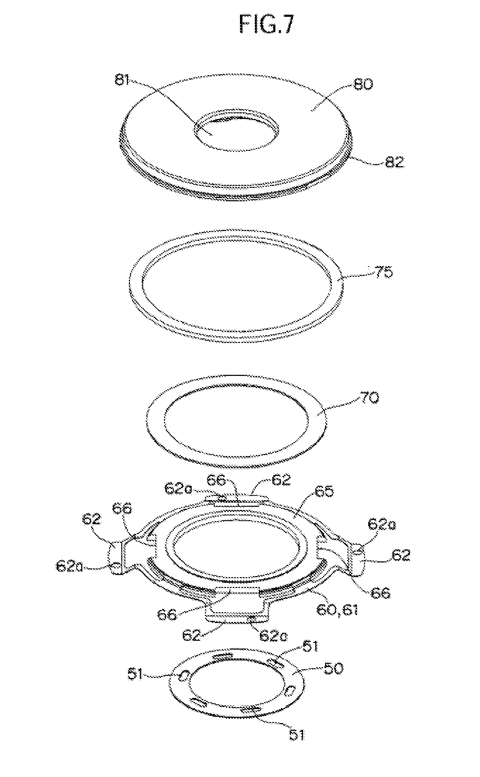

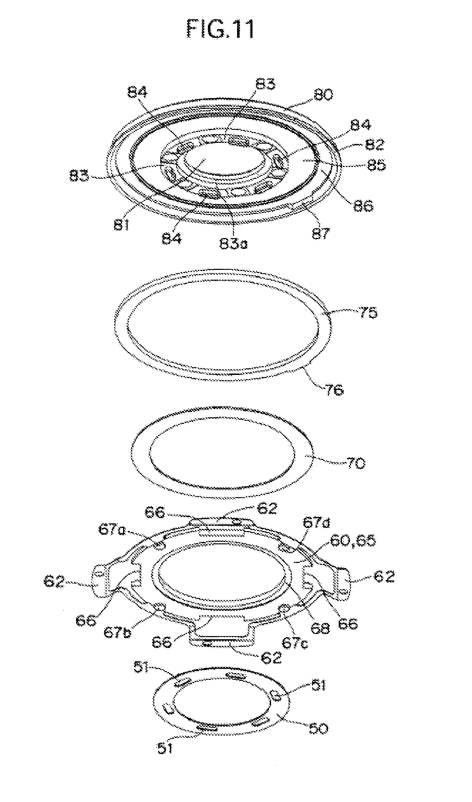

As shown in FIG. 7, the fixing ring 50 caulks and fixes the fits caulking projections 84 (see FIG. 11) of the manipulation dial 80 by fitting the fits caulking projections 84 in caulking holes 51, whereby the manipulation dial 80 is rotatably retained in the manipulation member 60.

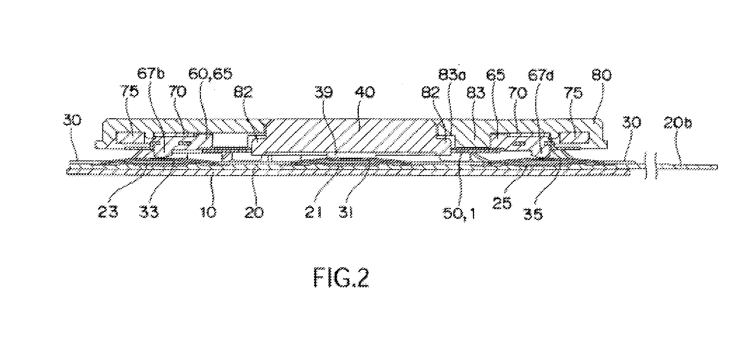

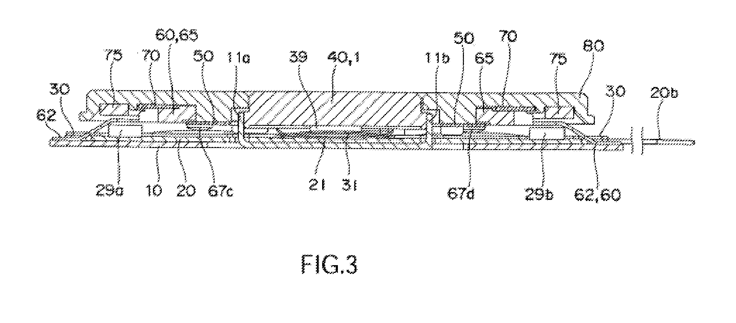

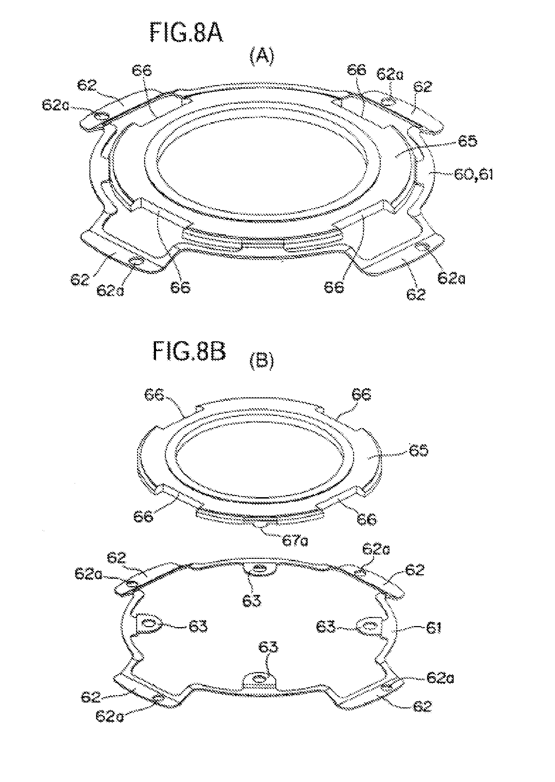

As shown in FIG. 8, in the manipulation member 60, a ring-shape resin pedestal portion 65 is integral with a ring-shape plate spring 61 which has a substantial circular shape when viewed from above. The ring-shape plate spring 61 includes positioning holes 62a, mounting portions 62, and integrally-molding extended portions 63. The positioning holes 62a are located in the outer circumferential edge portion of the ring-shape plate spring 61 while facing each other. The mounting portions 62 bent obliquely downward have substantial U-shape when viewed from above, and the mounting portions 62 are extended from the ring-shape plate spring 61. The integrally-molding extended portions 63 bent to the upward side are formed in the inner circumferential edge portion while facing each other. On the other hand, the pedestal portion 65 has an outer diameter and an inner diameter which can rotatably be fitted in a fitting groove 85 of the manipulation dial 80. In the pedestal portion 65, notches 66 are formed at predetermined intervals in the outer circumferential edge portion. The notch 66 is a relief which is formed so as not to prevent a pressing-down manipulation of the manipulation dial 80 (see FIG. 3). As shown in FIG. 11, in the pedestal portion 65, pressing projections 67a to 67d are projected at positions corresponding to the movable contacts 32 to 35 in the outer circumferential edge portion of the lower surface, and a ring-shape step portion 68 is formed in the inner circumferential edge portion of the lower surface to retain the fixing ring 50. As shown in FIG. 2, in rotating the manipulation dial 80, an inner circumferential surface of the pedestal portion 65 is directly slid on an outer circumferential surface of the ring projection 83 of the manipulation dial 80. Because the pedestal portion 65 is made of a resin, the pedestal portion 65 has a small friction coefficient and an excellent sliding property.

Thus, the metal components and the resin components are integrally formed in the manipulation member 60, so that the rigidity can be ensured by the metal components while the sliding property can be ensured by the resin component even if the manipulation input device is thinned. That is, in the manipulation member 60, the balance between the rigidity and the sliding property can be achieved as the rotating body retaining component.

Examples of the method for integrating the ring-shape plate spring 61 and the pedestal portion 65 include integrally molding, bonding, and fitting. The pressing projections 67a to 67d may be made of a resin while integrally molded with the pedestal portion 65, or the pressing projections 67a to 67d may be made of a material different from the pedestal portion 65, i.e., a material except for the resin. Not only the pressing projections 67a to 67d are provided in the pedestal portion 65 as described above, but also the pressing projections 67a to 67d may directly be provided in the ring-shape plate spring 61.

As shown in FIG. 7, the slide sheet 70 has a ring shape with which the upper surface of the pedestal portion 65 of the manipulation member 60 can be coated, and the slide sheet 70 is made of a resin having a predetermined friction coefficient.

As shown in FIG. 11, in a ring magnet 75, N poles and S poles are alternately arranged. The ring magnet 75 is fitted in and fixed to a ring groove 86 of the manipulation dial 80. Particularly, according to the embodiment, as shown in FIGS. 2 and 3, the ring magnet 75 is designed so as not to overlap the pedestal portion 65 of the manipulation member 60 even if the ring magnet 75 is assembled in the manipulation dial 80. Therefore, the manipulation input device can further be thinned. Because the manipulation dial 80 integrally rotated along with the ring magnet 75 is slid through the slide sheet 70, advantageously a small frictional resistance acts between the manipulation dial 80 and the slide sheet 70, and the low-profile manipulation input device which can smoothly be manipulated is obtained.

As shown in FIGS. 7 and 11, a manipulation hole 81 into which the push button 40 is fitted is made in the center of the manipulation dial 80, and a retaining ring rib 82 is provided in the outer circumferential edge portion of the manipulation dial 80. The retaining ring rib 82 can be used to retain the manipulation dial 80 in the chassis of the cellular phone. As shown in FIG. 11, in the manipulation dial 80, ring projections 83 are provided near an opening edge portion in the lower surface of the manipulation hole 81 to fix the fixing ring 50, and retaining ring-shape step portion 83a is formed on an inner circumferential surface side of the ring projection 83. Caulking projections 84 are regularly provided to caulk and fix the fixing ring 50 in the lower surface of the ring projection 83. A ring groove 85 and a ring groove 86 are coaxially provided outside the ring projection 83. The slide sheet 70 is fitted in the ring groove 85, and the ring magnet 75 is fitted in and fixed to the ring groove 86. A notch 87 is provided in the outer circumferential surface of the ring groove 86 to fit the projection 76 of the ring magnet 75 therein. It is not always necessary that the manipulation dial 80 be formed in the circular shape, but the manipulation dial 80 may be formed in a regular octagon as long as the manipulation dial 80 can be rotated.

A process of assembling the components will be described below. The jig holes 12a and 12b of the metal base 10 are positioned by inserting a pair of positioning pins (not shown) therein respectively. On the other hand, the hall elements 29a and 29b are mounted at predetermined positions of the board main body 20a of the printed-circuit board 20. Then, the positioning projections 11 a and 11 b and the positioning pins are inserted into the through-holes 26a and 26b and jig holes 27a and 27b of the printed-circuit board 20 and adhere integrally to the metal base 10. The movable contacts 31 to 35, the backing sheets 30a, and the spacer 39 adhere integrally to the insulating sheet 30 at predetermined positions. Then, the positioning projections 11 a and 11 b and the positioning pins are inserted into the through-holes 36a and 36b and jig holes 37a and 37b of the insulating sheet 30 respectively, whereby the insulating sheet 30 adheres integrally to the printed-circuit board 20.

On the other hand, the slide sheet 70 is assembled in the ring groove 85 while the ring magnet 75 is fitted in and bonded to the ring groove 86 of the manipulation dial 80. The ring groove 85 of the manipulation dial 80 and the pedestal portion 65 of the manipulation member 60 are assembled such that the slide sheet 70 is clamped between the bottom surface of the ring groove 85 and the pedestal portion 65. Then, the caulking projection 84 of the manipulation dial 80 is fitted in and caulked by the caulking hole 51 of the fixing ring 50, which allows the fixing ring 50 to engage the ring-shape step portion 68 of the pedestal portion 65. Therefore, the manipulation member 60 and the slide sheet 70 are clamped between the manipulation dial 80 and the fixing ring 50, whereby the manipulation member 60 rotatably supports the manipulation dial 80 through the slide sheet 70.

As shown in FIG. 4, while the push button 40 is positioned above the movable contact 31 of the printed-circuit board 20, the guiding slits 42a and 42b of the push button 40 are slide-engage the positioning projections 11 a and 11 b of the metal base 10 respectively. The positioning holes 13 of the metal base 10 and the positioning holes 62a of the manipulation member 60 are positioned through new positioning pins (not shown), and the push button 40 is fitted in the manipulation hole 81 of the manipulation dial 80 to retain the push button 40 through the ring spring 43. The mounting portions 62 of the manipulation member 60 are fixed to the exposed outer circumferential edge portion of the metal base 10 to complete the assembly work. Examples of fixing method include bonding, caulking, and bending in addition to the welding.

According to the embodiment, the manipulation member 60 is fixed to the metal base 10 so as not to be rotated. When any position of the manipulation dial 80 is pressed down, the pressing projections 67a to 67d of the manipulation member 60 press down the movable contacts 32 to 35 respectively, which allow the pressing-down manipulation to be performed. On the other hand, the rotating manipulation can be performed by rotating the manipulation dial 80 rotatably assembled in the upper surface of the manipulation member 60.

According to the embodiment, because the manipulation member 60 is biased upward by press-contacting the movable contacts 32 to 35, the looseness is not generated in the manipulation member 60. Because the excessive rotation caused by the inertia force can be suppressed in the manipulation dial 80 by the frictional force generated between the slide sheet 60 and the manipulation dial 80, advantageously the false manipulation is hardly generated.

A method for manipulating the cellular phone (not shown) into which the manipulation input device having the above configuration is incorporated will be described below. When the ring magnet 75 integral with the manipulation dial 80 is rotated by rotating the manipulation dial 80 incorporated into the cellular phone, the pair of hall elements 29a and 29b detects a change in magnetic field, and a rotating direction and a rotation amount are detected based on the change in magnetic field. The detection result is reflected as the movement of the scroll bar on the screen display of the monitor of the cellular phone. When the push button 40 is pressed at the time the scroll bar reaches the desired position, the movable contact 31 is inverted and brought into contact with the central fixed contact portion 21 to output a selection instruction. The movable contact 35 located immediately below the pressing projection 67d may be inverted and conducted to the fixed contact portion 25 by pressing down a surrounding portion of the manipulation dial 80, e.g., as shown in FIG. 2, the upper portion of the pressing projection 67d.

Obviously the manipulation input device according to the present invention can be applied to not only the cellular phone but also other mobile instruments or other electronic instruments.

## Claims

1. A manipulation input device comprising:
a base;
a printed-circuit board in which a plurality of push-button switches and a magnetic-field detection element are mounted on an upper surface thereof, the printed-circuit board adhering integrally to an upper surface of the base;
a manipulation member in which ring-shape plate spring and a pedestal portion are integrated, a pressing projection manipulably press-contacting a push-button switch of the printed-circuit board by fixing a mounting portion to an outer circumferential edge portion of the upper surface of the base, the pressing projection being provided toward a lower surface of the pedestal portion, the mounting portion being extended downward from an outer circumferential edge portion of the ring-shape plate spring; and
a manipulation dial in which a ring magnet is assembled in a lower surface thereof, N poles and S poles being alternatively arranged in the ring magnet, the manipulation dial being rotatably assembled in an upper surface of the pedestal portion,
wherein a change in magnetic flux of the ring magnet is detected with the magnetic-field detection element to detect a rotating direction by rotating the manipulation dial, and
the push-button switch is manipulated with the pressing projection provided in the lower surface of the pedestal portion of the manipulation member by pressing the manipulation dial.

2. The manipulation input device according to claim 1, wherein a resin pedestal portion is integrally molded in a metal ring-shape plate spring.

3. The manipulation input device according to claim 1 or 2, wherein an outer diameter of the pedestal portion of the manipulation member is smaller than an inner diameter of the ring magnet, and the pedestal portion of the manipulation member is disposed inside the ring magnet.

4. The manipulation input device as in any one of claims 1 to 3, wherein a push button is disposed in a manipulation hole through a ring spring upwardly bent and folded into two such that the push-button switch mounted in the printed-circuit board can be manipulated, the manipulation hole being made in a center of the manipulation dial.

5. An electronic instrument, wherein a manipulation dial is attached in an exposed manner such that the manipulation input device as in any one of claims 1 to 4 can be manipulated from an outside.
